# EUROPÄISCHE PATENTSCHRIFT

(11) **EP 1 942 780 B1**
(45) Veröffentlichungstag und Bekanntmachung des Hinweises auf die Patenterteilung: **11.03.2009**
(21) Anmeldenummer: 06804807.3
(22) Anmeldetag: 13.10.2006
(51) Int. Cl.: A47J 45/08

(54) **KOCHGEFÄSS MIT HANDGRIFF**
COOKING VESSEL WITH HANDLE
RÉCIPIENT DE CUISSON AVEC MANCHE

(30) Priorität: 27.10.2005 CH 17262005
(43) Veröffentlichungstag der Anmeldung: 16.07.2008
(73) Patentinhaber: AMC International Alfa Metalcraft Corporation AG, 6343 Rotkreuz (CH)
(72) Erfinder: BECK, Hans-Jürgen, 6014 Littau (CH)
(74) Vertreter: Liebetanz, Michael
(86) Internationale Anmeldenummer: PCT/CH2006/000571
(87) Internationale Veröffentlichungsnummer: WO 2007/048261

(56) Entgegenhaltungen:
- DE-A1- 19 521 023
- FR-A- 504 468
- FR-A- 509 244
- FR-A- 510 471
- FR-A- 519 603
- FR-A- 631 602

## Beschreibung

### Technisches Gebiet

Die Erfindung betrifft ein Kochgefäss mit einem Handgriff nach dem Oberbegriff des unabhängigen Anspruchs 1

### Stand der Technik

Aus dem Stand der Technik sind eine Reihe solcher Kochgefässe mit Griffen bekannt, bei denen eine Übergangszone zum eigentlichen Kochgefäss besteht, die als thermische Bremse dient. Aus der FR 2,730,399 ist ein solcher Griff bekannt, der aus einem einstückigen, flachen, horizontal angeordneten metallischen Element besteht, bei dem in einem Bereich nahe des Kochgefässes Löcher angeordnet sind, die in lokaler Weise den metallisch wärmeleitenden Querschnitt reduzieren und so den weiter vom Kochgefäss entfernten Griffbereich für den Benutzer weniger stark aufheizen lassen.

Aus der US 5,121,848 ist eine Pfanne mit einem metallischen Handgriff bekannt, der aus einem einzigen gestanzten Element besteht, welches in seiner Mitte umgebogen ist und somit zwei hohle Halbschalen für den Griffbereich bildet. Im Bereich nahe des Kochgefässes stehen die beiden Enden des Handgriffs, die mit dem Kochgefäss verbunden sind, senkrecht zur Unterbodenebene des Kochgefässes und bilden somit zwischen ihnen einen Durchlass, durch den beispielsweise an der Pfanne aufsteigende heisse Luft hindurchsteigen kann.

Aus der DE 92 11 465 U1 ist ein Kochgefäss bekannt, bei dem im Randbereich angrenzend an den Handgriff Schlitze vorgesehen sind, die ein Durchlassen von an dem Topf aufsteigender warmer Luft ermöglichen.

Die Vorrichtungen nach dem Stand der Technik sind allesamt dafür vorgesehen, an dem Kochgefäss aufsteigende warme Luft und Gase leichter hindurchzulassen, so dass diese den Handgriff nicht allzu sehr erwärmen.

Es handelt sich hierbei teilweise um sehr einfache Konstruktionen, die vom Benutzer nur unhandlich zu ergreifen sind. Darüber hinaus führt das Vorsehen der verschiedenen Durchlässe zu einer Schwächung des dahinterliegenden Griffbereichs und damit insbesondere bei gefüllten grösseren Töpfen oder Pfannen zu Instabilitäten des Handgriffs, insbesondere bei längerer Gebrauchsdauer.

Aus der FR-A-510 471 ist ein Kochgefäss mit einem Handgriff nach dem Oberbegriff des unabhängigen Anspruchs 1 bekannt.

### Zusammenfassung der Erfindung

Ausgehend von diesem Stand der Technik liegt der Erfindung die Aufgabe zugrunde, ein Kochgefäss mit einem verbesserten Handgriff anzugeben, bei dem die oben genannten Nachteile des Standes der Technik vermieden werden. Als Kochgefässe kommen dabei ohne Anspruch auf Vollständigkeit der Aufzählung, Pfannen, Sauteusen, Kasserollen, Töpfe etc. in Betracht, schlussendlich allesamt Küchengerätschaften, die auf eine Heizplatte oder Heizfläche in einer Küche abstellbar sind; unabhängig davon, ob die Hitze durch Induktion, Heizschlangen oder Gasflammen erzeugt wird.

Diese Aufgabe wird mit einem Kochgefäss mit einem verbesserten Handgriff nach den Merkmalen des Anspruchs 1 gelöst.

Damit wird durch die Wärmesperre eine verminderte Wärmeleitung in den Griffbereich erreicht, ohne die Stabilität des Handgriffs selbst zu verringern.

Weitere vorteilhafte Ausführungsformen sind in den Unteransprüchen gekennzeichnet.

### Kurze Zusammenfassung der Zeichnungen

Die Erfindung wird nun unter Bezugnahme auf die Zeichnung anhand von einigen Ausführungsbeispielen beispielhaft erläutert. Es
zeigen:
- Figur 1: eine perspektivische Explosionsansicht eines Handgriffs für ein Kochgefäss gemäss einem ersten Ausführungsbeispiel der Erfindung,
- Figur 2: eine perspektivische Explosionsansicht eines Handgriffs für ein Kochgefäss gemäss einem zweiten Ausführungsbeispiel der Erfindung,
- Figur 3: den Handgriff nach Figur 2 im zusammengebauten Zustand mit als Schattenlinien eingezeichnetem Innenleben des Handgriffs,
- Figur 4: eine perspektivische Ansicht eines Handgriffs für ein Kochgefäss gemäss einem dritten Ausführungsbeispiel im zusammengebauten Zustand mit als Schattenlinien eingezeichnetem Innenleben des besagten Handgriffs; dieses Ausfühungsbeispiel fällt nicht unter dem Schutzbereich der Ansprüche.
- Figur 5: eine perspektivische Ansicht eines Handgriffs für ein Kochgefäss gemäss einem vierten Ausführungsbeispiel der Erfindung im zusammengebauten Zustand,
- Figur 6: eine perspektivische Explosionsansicht eines Handgriffs für ein Kochgefäss gemäss einem fünften Ausführungsbeispiel der Erfindung,
- Figur 7: eine perspektivische Ansicht eines Handgriffs für ein Kochgefäss gemäss dem fünften Ausführungsbeispiel der Erfindung im zusammengebauten Zustand, und
- Figur 8: eine weitere perspektivische Explosionsansicht des Handgriffs nach Figur 6.

### Ausführliche Beschreibung der Ausführungsbeispiele

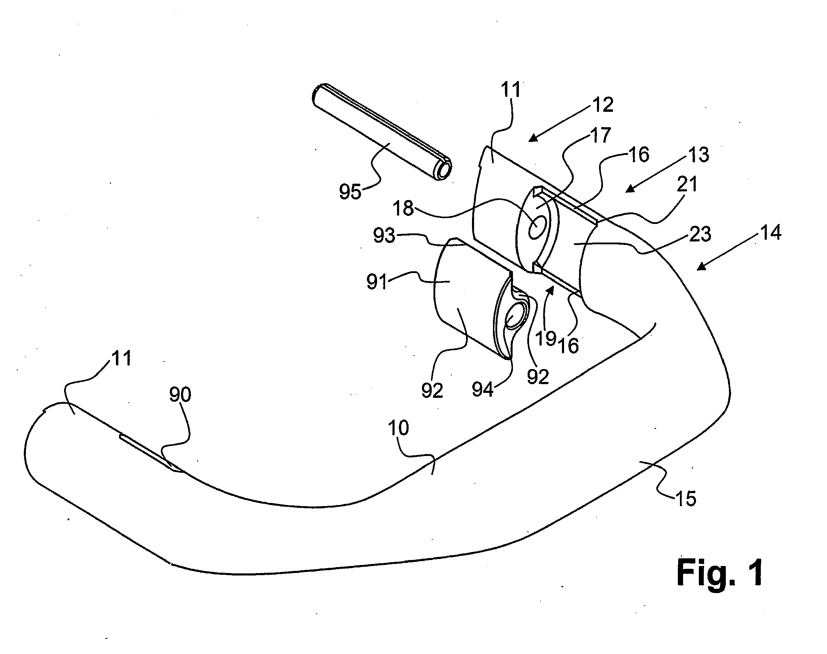

Die Figur 1 zeigt einen Handgriff 10 für ein in den Zeichnungen nicht dargestelltes Kochgefäss gemäss einem ersten Ausführungsbeispiel der Erfindung. Der Handgriff 10 ist beispielsweise U-förmig und wird an seinen beiden freien Enden 11 an einem Kochgefäss befestigt. Er kann aber auch L-förmig sein und nur ein freies Ende 11 zur Befestigung an einem Kochgefäss besitzen. Die Befestigung an dem Kochgefäss durch beispielsweise Buckelschweissen wird vorzugsweise nach Zusammenbau des erfindungsgemässen Handgriffs durchgeführt.

Vorteilhafterweise besteht dieser einstückige Handgriff 10 aus Metall und ist hohl, wenn er aus einem Rohr oder einem Blechteil hergestellt ist, oder er ist aus Vollmaterial durch z.B. Schmieden oder Giessen hergestellt. An den beiden freien Enden 11 kann, jeweils ein Befestigungsbereich 12 bestehen, an den sich ein erfindungsgemässer Übergangsbereich 13 und schliesslich der eigentliche erste Abschnitt des Handgriffbereichs 14 anschliesst. Die Bereiche 12 und 13 sind dabei in bezug auf ihre Längsachse auf beiden Seiten jeweils parallel zueinander angeordnet und stehen zum eigentlichen Handgriffbereich 15 senkrecht. Der Handgriffbereich 15 hat eine Länge die ein bequemes Umfassen des Bereichs 15 durch eine Hand eines Benutzers, inklusive eines von diesem vorher ergriffenen Topflappens oder ähnlichen Hilfsmittels, gestattet.

Der Abschnitt 14 ist vorteilhafterweise fluchtend mit den Abschnitten 12 und 13 ausgerichtet, kann aber sehr kurz ausgestaltet sein, sofern er (siehe unten) zur Aufnahme der überstehenden Länge des Arretierungsstiftes 95 ausreicht. Der Abschnitt 12 ist an dem Topf als Beispiel eines Kochgefässes befestigt und ist üblicherweise dabei nicht direkt radial zur Topfmitte ausgerichtet. Die Abweichung von der radialen Ausrichtung hängt von der Länge des Griffbereichs 15 und der Grösse des Kochgefässes ab. Wesentlich ist für die einfache Benutzung eines solchen Handgriffs 10 mit zwei oder einem freien Ende 11 die tangentiale Ausrichtung des Griffbereichs 15.

Bei einem Handgriff für eine Pfanne ist es häufig gewünscht nur einen einzelnen stabförmigen Handgriff zu haben, wobei der Griffabschnitt 15 radial ausgerichtet ist. Dann sind alle Abschnitte 12, 13 und 14 mit dem Griffabschnitt 15 vorzugsweise radial ausgerichtet.

Bei einem hohlen Handgriff 10 kann die ihn bildende Metallhülse eine Metalldicke im Mantel zwischen 1/20 und 1/8 des Gesamtdurchmessers des Handgriffs 10 im Querschnitt aufweisen. Im Übergangsbereich 13 ist ein Teilbereich des Mantelmaterials des Handgriffs 10 weggenommen und bildet somit eine seitliche Öffnung 19, die gegenüber einem verbleibenden Metallbereich 23 angeordnet ist. In der in der Figur 1 dargestellten Ausführungsform ist dies die jeweils nach innen gerichtete Hälfte des Handgriffs. Damit bilden sich im oberen und unteren Bereich des Übergangsbereichs 13 obere und untere Mantelkanten 16. Vorzugsweise sind die weggenommenen Bereiche im Fall eines Hohlgriffes des Übergangsbereichs 13 nicht entfernt worden, sondern sind nach innen umgebogen worden, um die Verschlussbereiche 17 an den gegenüberliegenden Enden des Übergangsbereichs 13 zu bilden. Die Verschlussbereiche 17 decken jeweils vorteilhafterweise den gesamten Querschnitt des Handgriffs 10 gegenüber den anschliessenden Bereichen 12 und 14 ab. In den Übergangsbereichen 17 ist jeweils ungefähr mittig, also fluchtend zur Längsachse der Abschnitte 12 und 14 eine Bohrung 18 vorgesehen.

In die sich durch den weggenommenen Bereich ergebende seitliche Öffnung 19, die hier 50 % des Mantels beträgt, aber auch zwischen 1/3 und 2/3 der Gesamtmetallfläche betragen kann, ist ein Keramikstück 90 eingesetzt, welches vorteilhafterweise eine äussere Mantelfläche 91 aufweist, die im wesentlichen der weggenommenen Mantelfläche des Übergangsbereichs 13 entspricht, so dass sich zwischen den Bereichen 12, 13 und 14 eine glatte Fläche ausbildet, wie es in der Fig. 1 auf der linken Bildseite erkennbar ist.

Das Keramikstück 90 verfügt an seiner nach innen gerichteten Seite über eine Konturfläche 92, die vorteilhafterweise den besagten Hohlraum der Öffnung 19 des weggenommenen Übergangsbereiches 13 im wesentlichen ausfüllt. Das Keramikstück 90 liegt somit mit seinen oberen und unteren Kanten 93 formschlüssig abschliessend auf den Kanten 16 der Metallhülle des Übergangsbereiches 13 auf. Die vier Eckkanten des Keramikstückes 90 können abgeschrägt sein, um mit entsprechenden Eckkanten 21 an den oberen beziehungsweise unteren Mantelkanten 16 anzustossen. Gemäss dem dargestellten Ausführungsbeispiel ist das ansonsten aus einem Vollmaterial bestehende Keramikstück 90 jedoch mit einer Durchbohrung 94 versehen, die mit dem Loch 18 in der Verschlussfläche 17 fluchtend ausgerichtet ist, so dass ein Arretierungsstift 95 von dem freien Ende 11 des Handgriffs 10 durch diese Löcher und Bohrungen 18 und 94 und 18 hindurchgeschoben werden kann. Der Arretierungsstift 95 ist dabei ein länglicher Federring, der in zusammengedrücktem Zustand durch die Bohrungen 18 und 94 hindurchgeschoben wird, um dann im entspannten Zustand das Keramikstück 90 sicher im Handgriff 10 zu halten.

Nach diesem Fertigungsschritt wird dann der Handgriff 10 in bekannter Weise, beispielsweise durch Schweissen, an dem Kochgefäss befestigt.

Anstelle des Keramikstückes 90 kann in allen Ausführungsbeispielen der Erfindung auch ein Kunststoffstück Verwendung finden, wobei ein Kunststoffmaterial ausgewählt wird, welches hohen Temperaturen widersteht, beispielsweise Temperaturen von 250 oder sogar 300 Grad Celsius.

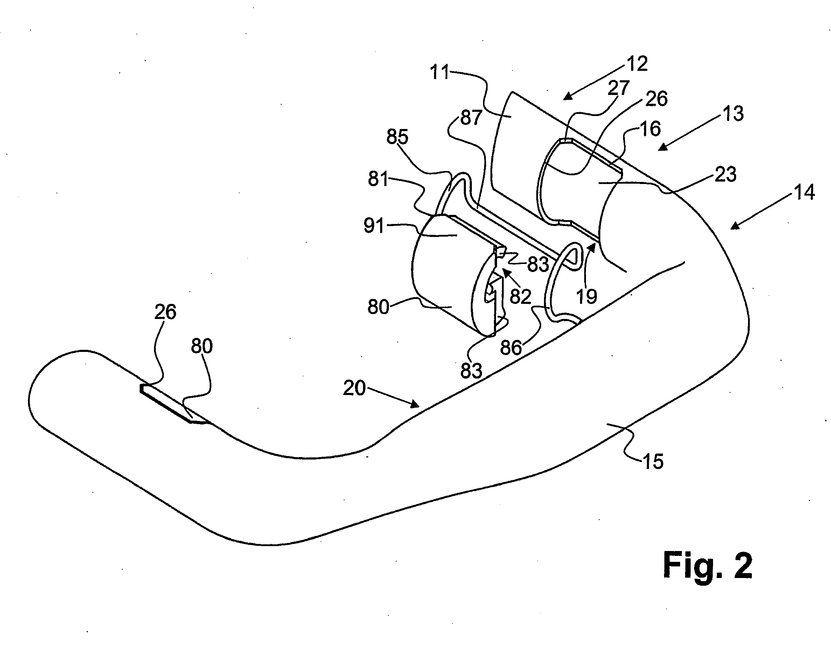

Die Figur 2 zeigt einen Handgriff 20 für ein Kochgefäss gemäss einem zweiten Ausführungsbeispiel der Erfindung. Gleiche und ähnliche Merkmale sind in allen Figuren bei den verschiedenen Ausführungsbeispielen mit den gleichen Bezugszeichen gekennzeichnet. Der Handgriff 20 verfügt auch hier über die drei aufeinanderfolgenden Bereiche 12, 13 und 14 an den freien Enden 11. Im Unterschied zum ersten Ausführungsbeispiel ist hier jedoch das schlussendlich die Öffnung 19 bildende Metallmaterial im Übergangsbereich 13 vollkommen ausgestanzt oder weggenommen, so dass sich neben den oberen und unteren Mantelkanten 16 links und rechts seitliche Mantelflächen 26 ergeben. Auch sind die Übergangsbereiche zwischen den Kantenflächen 16 und 26 durch Übergangskanten 27 angenähert, um einen spitzen Winkel in den Ecken zu vermeiden. Statt den Kanten 27 in Form eines Polygonzuges aus drei Bereichen können auch in der Form abgerundete oder elliptische Übergangsbereiche 27 vorgesehen sein.

Das hier einzusetzende Keramikstück 80 weist wie das Keramikstück 90 beim ersten Ausführungsbeispiel eine äussere Mantelfläche 91 auf, die im Zusammenspiel mit der Ausnehmung 19 einen vollständigen Abschluss des Übergangsbereiches 13 nach aussen bietet. Demgemäss sind hier Kantenbereiche 81 ausgebildet, um mit den Kanten 27 den Abschluss in den Ecken zu bilden. Auf der gegenüber dem Handgriff 20 innenliegenden Seite ist eine Nut 82 vorgesehen, um einen Haltebügel 85 aufzunehmen. Die sonstige Rückseite des Keramikstückes 80 ist hier nicht vollständig komplementär zum weiterhin bestehenden Mantelbereichs des Übergangsbereichs 13 ausgestaltet. Es besteht aber ein überstehender Ansatz 83 am oberen und unteren Ende des Keramikstückes 80, welcher jeweils unter der Kante 16 in den Hohlraum der Öffnung 19 eingreift.

Beim Zusammenbau wird der Haltebügel 85 mit der Klammerfunktion von dem freien Ende 11 her in den Befestigungsabschnitt 12 eingeschoben und durch die seitlichen, der Innen- und Aussenform der Abschnitte 12 und 14 folgenden Seitenarmbereiche 86 in den Bereichen 12 und 14 verspannt. Der parallel zur Hauptachse der Bereiche 12, 13 und 14 verlaufende Längsbügelarm 87 ist dabei so in dem Hohlraum 19 angeordnet, dass das Keramikstück 80 mit seiner Nut 82 in diesen Hohlraum eingeklippst werden kann, um eine unter einer Vorspannung gehaltene Verbindung zwischen Keramikstück 80 und Handgriff 20 zu gewährleisten.

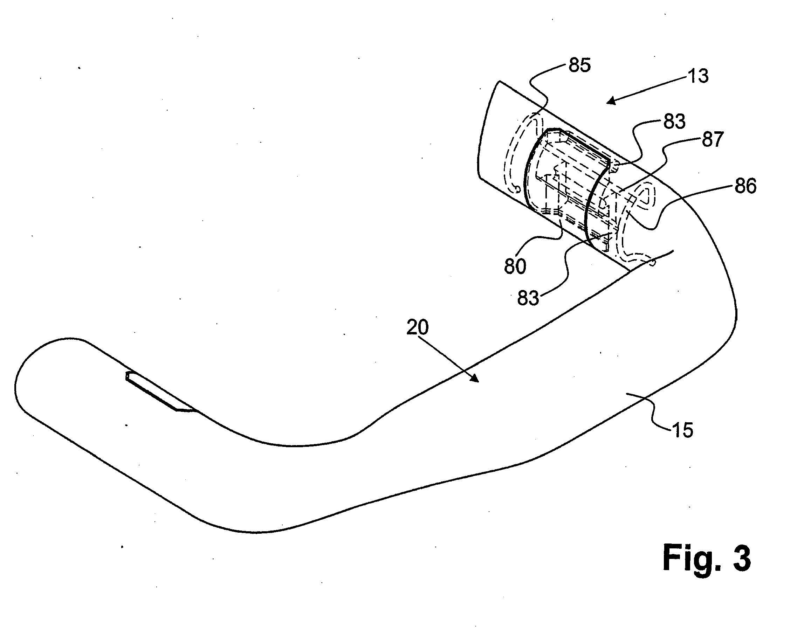

Die Figur 3 zeigt das Ausführungsbeispiel der Figur 2 nun in einem zusammengesetzten Zustand, wobei die innenliegenden Elemente als Schatten dargestellt sind. Es ist gut zu erkennen, dass jeweils ein Teilbereich 83 des keramischen Einsatzstückes 80 unter den Mantel im Übergangsbereich 13 angeordnet ist und somit einen weiteren dichtenden Abschluss bildet. Hier ist das Keramikstück 80 mit seiner Mantelfläche 91 so ausgestaltet, dass Teile der oberen und unteren Mantelkanten 16 und Teile der seitlichen Mantelflächen 26 überstehen, also die Mantelfläche 91 nicht bündig mit der Oberfläche der Abschnitte 12, 13 und 14 ausgestaltet ist, sondern leicht zurücksteht.

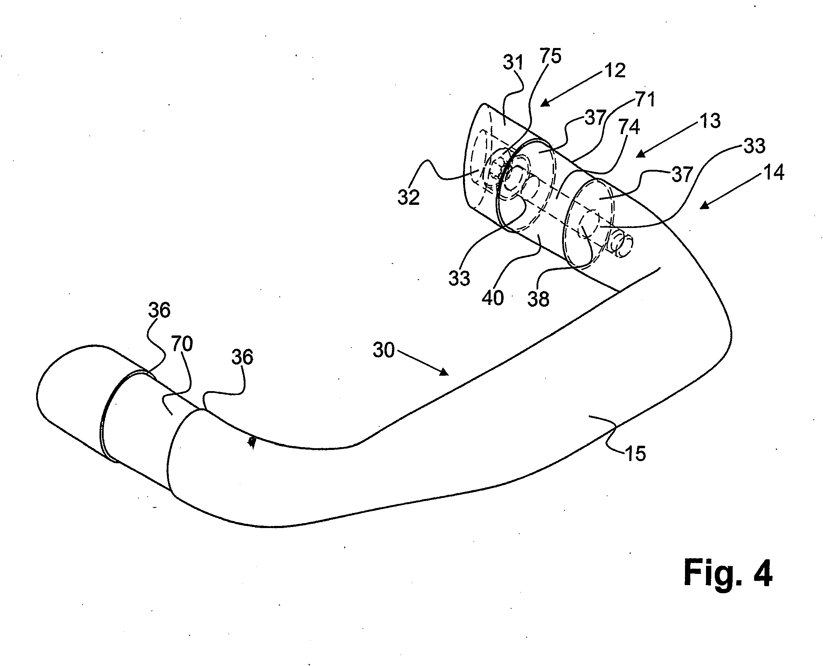

Die Figur 4. zeigt ein drittes Ausführungsbeispiel für einen Handgriff 30, welches nicht unter dem Schutzbereich der Ansprüche fällt. In diesem Fall ist der Übergangsbereich 13 dadurch gebildet, dass ein Endstück 31 des dritten Handgriffs 30 vom übrigen Handgriff und damit insbesondere vom Bereich 14 abgetrennt worden ist. Es kann dabei ein Hohlrohr entsprechend durchtrennt worden sein. Es kann aber auch, wie in dem hier dargestellten Ausführungsbeispiel, gesondert und insbesondere aus Vollmaterial hergestellt worden sein. Insofern besteht der Übergangsbereich 13 beim Handgriff 30 nach Figur 4 ausschliesslich aus einem Keramikstück 70. Dieses Keramikstück 70 ist hier in einem etwas kleineren Durchmesser als die benachbarten Abschnitte 12 und 14 ausgestaltet, so dass ein kleiner Rand 36 umlaufend an beiden Seiten gegenüber den Abschnitten 12 und 14 übersteht.

Das Keramikstück 70 kann jedoch auch bündig mit dem Handgriff ausgestaltet sein. Die beiden Bereiche 12 und 14 sind vorteilhafterweise mit einem sie verschliessenden Abschlussdeckel 37 ausgestaltet, der jeweils vorteilhafterweise in mittiger Ausrichtung und Längsausrichtung über eine Bohrung 38 verfügt. Das Keramikstück 70 selber verfügt ebenfalls über eine mittige Bohrung 74.

Bei dem hier dargestellten Ausführungsbeispiel ist der Endbereich 31 nicht aus einem dünnen Blech gefertigt, sondern aus Vollmaterial, in dem eine zylindrische Bohrung 32 eingebracht ist. Durch diese Bohrung, die eine verengende Stufe auf den Durchmesser der Bohrung 33 entsprechend im Keramikteil 70 aufweist, kann von dem freien Endbereich 11 her eine Schraube 75 (hier mit Innensechskant) eingesetzt werden, die das Teil 31, das Keramikteil 70 und den Rest vom Handgriff 30 in der Bohrung 33 verschraubt, wenn dort im Abschnitt 14 ein entsprechendes Gewinde vorgesehen ist.

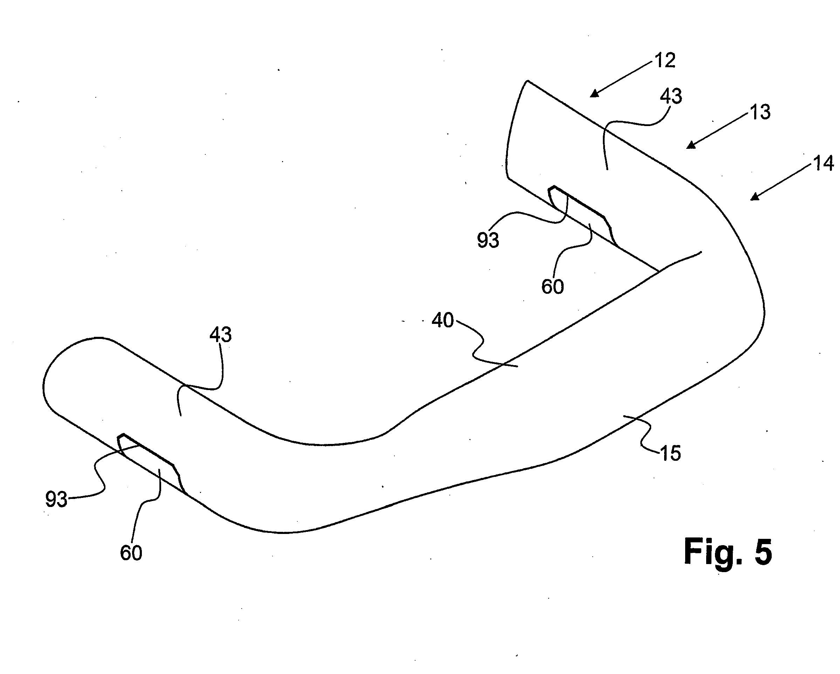

Die Figur 5 schliesslich zeigt einen Handgriff 40 für ein Kochgefäss in einem zusammengesetzten Zustand nach einem vierten Ausführungsbeispiel der Erfindung. Der Aufbau des Keramikstückes 60 entspricht dem vom ersten Ausführungsbeispiel. Es ist gut zu erkennen, dass hier jeweils die Kanten 93 keramischen Einsatzstückes 60 symmetrisch gegenüber der Unterseite des Handgriffes 40 angeordnet sind, so dass das Einsatzstück 60 nach unten orientiert ist. Der verbleibende Mantel 43 des Handgriffs 15 im Übergangsbereich 13 ist nach oben orientiert angeordnet und bildet somit einen nochmals weniger der Wärme ausgesetzten leitenden Bereich. Hier ist das Keramikstück 60 mit seiner Mantelfläche so ausgestaltet, dass es die vollständige untere Fläche des Handgriffs 40 abdeckt, im (nicht dargestellten) Querschnitt entspricht dies 180 Grad. Diese Winkelabdeckung führt für den verbleibenden Mantel zu einem im wesentlichen gleichen Abdeckungswinkel von 180 Grad. Das Keramik- oder Kunststoffstück kann auch einen kleineren Winkel einnehmen, der beispielsweise bis zu minimal 120 Grad (vorteilhafterweise plus/minus 60 Grad bezüglich der horizontalen Ebene bei den Ausführungsbeispielen nach Fig. 1 bis 3 und bezüglich der vertikalen Ebene bei dem Ausführungsbeispiel nach Fig. 5) betragen kann. Grössere Winkel bis zu 270 Grad sind auch möglich.

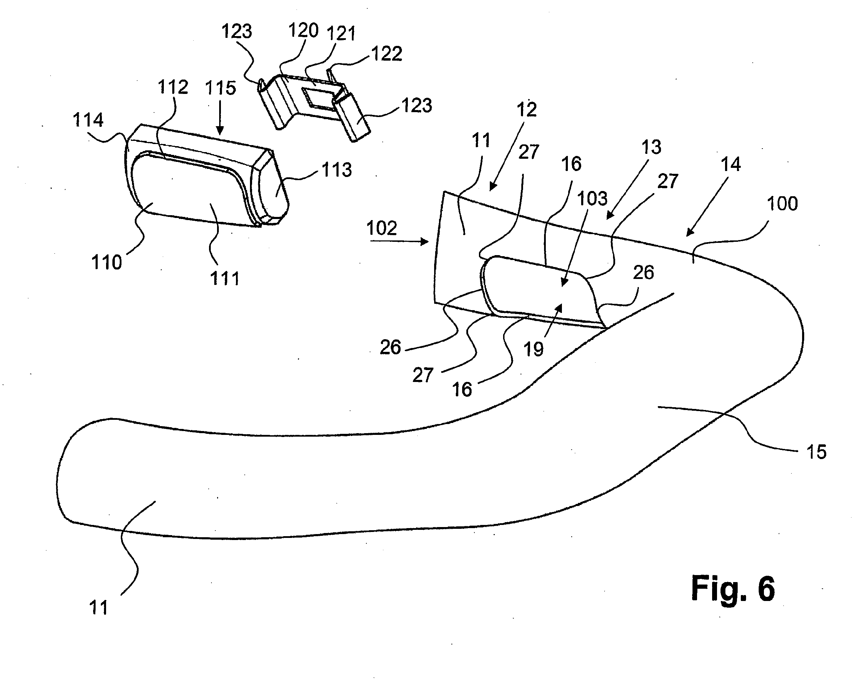

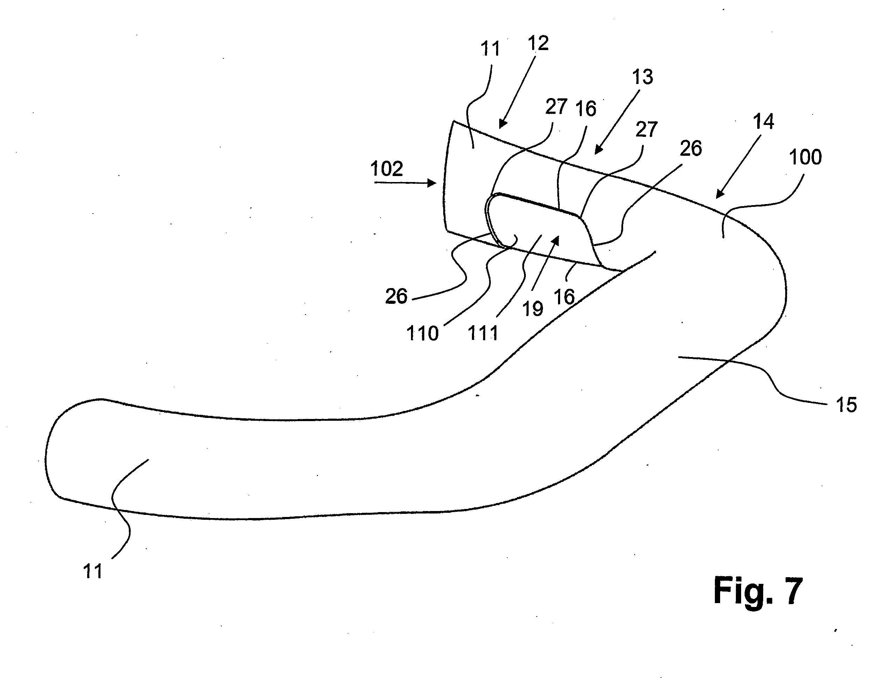

Die Figuren 6 bis 8 zeigen perspektivische Ansichten eines fünften Ausführungsbeispiels gemäss der vorliegenden Erfindung. Gleiche Teile sind mit gleichen Bezugszeichen versehen. Das fünfte Ausführungsbeispiel umfasst im wesentlichen einen Handgriff 100, ein Keramikstück 110 und ein Federstück 120.

Der Handgriff 100 weist eine Öffnung 19 auf, welche durch Mantelränder 16 und seitliche Mantelränder 26 begrenzt wird. Die Öffnung 19 ist im wesentlichen rechteckig ausgestaltet. Der Bereich, in welchem die Mantelränder 16 auf die seitlichen Mantelränder 26 treffen, ist vorzugsweise mit einem Übergangsbereich 27 abgerundet ausgestaltet. Der Handgriff 100 ist hohl ausgestaltet und weist eine Innenwandung 103 auf. In seinem freien Endbereich weist der Handgriff 100 zudem eine Einschuböffnung 102 auf. Durch die Einschuböffnung 102 lassen sich das Keramikstück 110 und das Federstück 120 in den hohlen Handgriff 100 einschieben.

Das Keramikstück 110 umfasst im wesentlichen einen Keramikkörper 113 mit einer Mantelfläche 111 mit Mantelkanten 112 und einer hinteren Seite 115. Die Mantelfläche 111 entspricht im wesentlichen der weggenommenen Mantelfläche des Übergangsbereichs 13, so dass, wenn das Keramikstück 110 in der Öffnung 19 eingesetzt ist, zwischen den Bereichen 12, 13 und 14 eine glatte Fläche ausgebildet wird. Die Mantelfläche 111 wird durch die Mantelkanten 112 begrenzt. Die Mantelkanten 112 sind in ihrer Gestalt dabei derart ausgestaltet, dass diese im wesentlichen der Kontur der Öffnung 19, welche sich durch die Mantelränder 16, die seitlichen Mantelränder 26 und die Übergangsbereiche 27 definiert, entspricht. Demnach kann das Keramikstück 110 formschlüssig in die Öffnung 19 eingepasst werden. Sobald das Keramikstück 110 eingepasst ist, steht dieses mit der Anschlagsoberfläche 114 des Keramikkörpers 113 an der Innenwandung 103 des Handgriffes 100 an. Vorzugsweise entspricht die Distanz zwischen Anschlagsoberfläche 114 und Mantelfläche 111 der Dicke der Wandung des Handgriffes. So kann das Keramikstück 110 derart angeordnet bzw. eingepasst werden, dass die Mantelfläche 111 bündig zur äusseren Oberfläche des Handgriffes 100 ist.

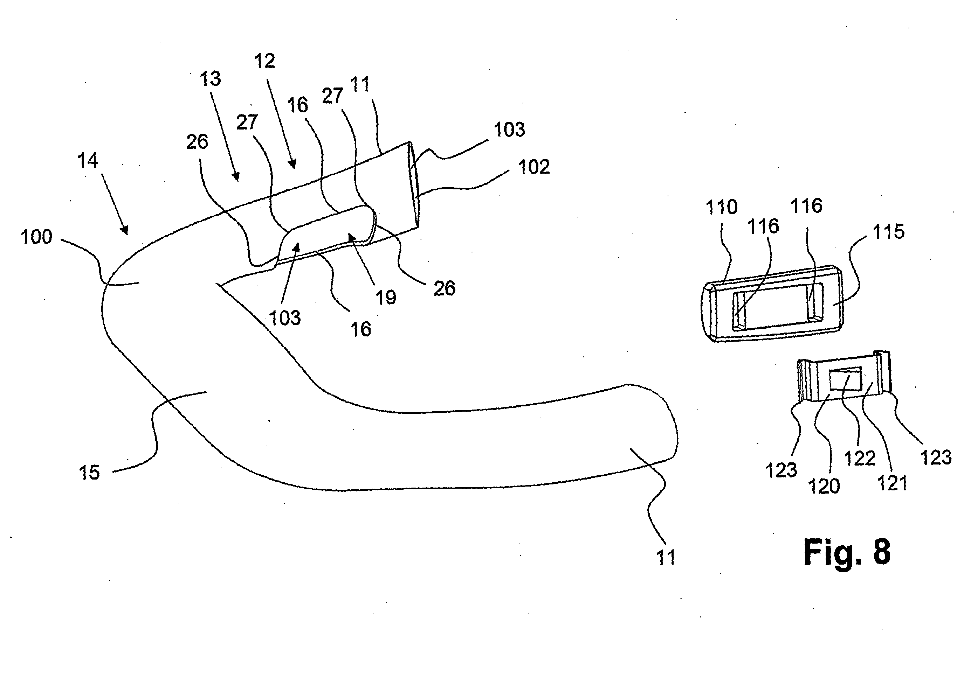

Figur 8 zeigt das Keramikstück 110 von hinten. Das Keramikstück 110 weist auf der hinteren Seite 115 Aufnahmeöffnungen 116 auf. Die hintere Seite 115 ist gegenüber der Mantelseite 111 am Keramikkörper 113 angeordnet. Die Aufnahmeöffnungen 116 können Teile des Federkörpers 120 aufnehmen. Die Aufnahmeöffnungen 116 haben im wesentlichen einen rechteckigen Querschnitt.

Das Federstück 120 weist in einem mittleren Bereich einen Grundkörper 121 mit einen Federlappen 122 und in den beiden Endbereichen, welche sich dem mittleren Bereich anschliessen, je ein Federschenkel 123 auf. Der Federlappen 122 und die Federschenkel 123 stehen in unterschiedlicher Richtung vom Grundkörper 121 ab. Der Federlappen 122 weist dabei die Gestalt eines vom Grundkörper 121 abstehenden Steges auf. Die Federschenkel 122 sind als vom Grundkörper abstehende und umgebogene Schenkel ausgebildet. Die Federschenkel 122 greifen in die Ausnahmeöffnungen 116 des Keramikstückes 110 ein. Durch die Form der Umbiegung an deren Ende können die Federschenkel 122 nach dem Zusammendrücken der Umbiegung eine Federschenkelkraft in eine Richtung, welche im wesentlichen senkrecht zum Federschenkel 122 ist, bewirken.

Mittels dem Federstück 120, welches zwischen der Innenwandung 103 und dem Keramikkörper 113 angeordnet ist, wird mit den Federlappen 122 eine Federkraft bereitgestellt, welche das Federstück 120 mit der Oberfläche 114 an die Innenwandung 103 des Handgriffes drückt. Dabei sind die Federschenkel 123 mit dem Keramikkörper 110 im Eingriff und der Federlappen 122 liegt auf einem Bereich der Innenwandung 103, welcher gegenüber der Öffnung 19 liegt, auf.

Das Federstück 120 wird in einem ersten Schritt mit dem Keramikstück 110 verbunden. Das heisst die Federschenkel 122 greifen in die beschriebenen Aufnahmeöffnungen 116 ein. Durch die Federschenkelkraft wird sichergestellt, dass sich das Federstück 120 nicht vom Keramikstück 110 lösen kann. Anschliessend wird das Keramikstück 110 mit dem Federstück 120 durch die Einschuböffnung 102 in den hohlen Handgriff 100 geschoben. Sobald der Federlappen 122 in den Hohlraum eingeschoben ist und demnach die Innenseite 103 berührt, bewirkt dieser Federlappen 122 eine Federkraft auf das Keramikstück 110 und drückt dieses mit der Mantelfläche 111 gegen die Innenseite 103. Das Keramikstück 110 und das Federstück 120 werden dann weitergeschoben, bis die Mantelkanten 112 mit den Mantelrändern 16, den seitlichen Mantelrändern 26 und den Übergangsbereichen 27 kongruent ist. Dann wird das Keramikstück 110 durch das Federstück 120 in Richtung der Öffnung 19 gedrückt und rastet dann formschlüssig ein. Durch die Federkraft, welche das Keramikstück in Richtung der Innenwandung 103 drückt, und durch die formschlüssige Begrenzung durch die Mantelränder 16, die seitlichen Mantelränder 26 und durch die Übergangsbereiche 27 ist das Keramikstück in der Öffnung 19 kraftschlüssig bzw. formschlüssig blockiert.

Allen Ausführungsbeispielen ist gemeinsam, dass ein Befestigungsabschnitt 12 besteht, an und durch den der Handgriff 10, 20, 30 oder 100 an einem Kochgefäss befestigt ist. Dieser Befestigungsabschnitt 12 kann insbesondere eine Länge von 5 bis 25 Millimeter aufweisen. Dadurch beginnt der verdünnte oder fehlende Metallabschnitt 13, vorteilhafterweise in einem Abstand von 5 bis 25 Millimeter, insbesondere vorzugsweise zwischen 10 und 15 Millimeter, nach einem dem Kochgefäss nahen Abschnitt 12 und die Wärmeleitung in Richtung des Griffbereichs 15 kann in wirksamer Weise unterbunden werden. Zum einen ist der verdünnte oder fehlende Metallbereich im Abschnitt 13 dazu geeignet, die Wärmeleitung aus dem Kochgefäss selbst zu vermindern, andererseits kann die, insbesondere bei Gasherden bestehende und am Topfrand aufsteigende heisse Luft oder andere Gase, nicht mehr den Handgriff 10, 20, 30 oder 100 erwärmen. Durch den Abschluss des ausgehöhlten oder weggefallenen Zwischenbereichs 13 durch ein Keramikelement 70, 80, 90 oder 110 wird einerseits eine bessere Wärmeisolierung erreicht, andererseits wird durch den sich durch dieses Keramikelement 70, 80, 90 oder 110 ergebende Formschluss die Stabilität des Handgriffs verbessert und schliesslich gestattet diese Ausgestaltung die Ausgestaltung des Handgriffs 10, 20, 30 oder 100 in einer Hohlbauweise, insbesondere durch Formen eines dünnen Metallblechs, vorzugsweise in Rohrform, zu einem Griffbereich 15, ohne dass die in Nähe des Topfrandes aufsteigenden Gase in diesen hohlen Bereich eindringen und direkt aufheizen können. Der Übergangsabschnitt 13 hat vorteilhafterweise selber eine Länge von 10 bis 30 Millimeter, insbesondere vorzugsweise zwischen 15 und 25 Millimeter. Die Mantelfläche 91 oder 71 ist dabei gegenüber den benachbarten Bereichen 12 und 14 formschlüssig, vorzugsweise im wesentlichen ähnlich mit nur geringen Kantenstufen. Die verbleibenden Metallbereiche 23 des Abschnitts 13 können wie dargestellt senkrecht ausgestaltet sein und somit in Hauptrichtung von heissen vorbeiströmenden Gasen ausgerichtet sein, sie können aber auch im wesentlichen horizontal angeordnet sein, wobei dann die Keramikstücke 60 nach unten gegen die vorbeiströmenden Gase gerichtet sind. In anderen in den Figuren nicht dargestellten Ausführungsformen sind die wärmeisolierenden Stücke 60, 70, 80, 90, 110 auf der jeweils nach aussen gerichteten Hälfte des Handgriffs angeordnet, wobei der Begriff "Hälfte" im Sinne von hauptsächlich auf dieser Seite zu verstehen ist, da die Winkelabdeckung, wie oben erwähnt auch grösser und kleiner als 180 Grad sein kann.

Die Zeichnungen zeigen jeweils Topfgriffe 10, 20, 30, 40, 100 mit zwei freien Enden. Es ist dem Fachmann klar, dass auch beispielsweise Pfannengriffe so ausgestaltet sein können, bei denen nur ein freies Ende 11 besteht, so dass auch nur jeweils ein Abschnitt 12, 13 und 14 besteht.

Als metallischer Werkstoff für die Abschnitte 12, 13 sofern vorhanden, 14 und 15 kommt insbesondere rostfreier Stahl aber auch weitere Metalle in Frage, die für Handgriffe im Küchenbereich eingesetzt werden.

Als Keramikwerkstoff kommen alle Materialien mit einer hohen Temperaturbeständigkeit wie 250 Grad Celsius, vorzugsweise grösser 300°C, und einer niedrigen Wärmeleitfähigkeit, vorzugsweise kleiner 5 Wk⁻¹m⁻¹ in Frage, wie beispielsweise Zirkonoxid, Magnesiumaluminiumsilikat oder auch Glaskeramik. diese Wärmesperren in Frage, sofern sie Temperaturen von vorzugsweise grösser 300°C widerstehen und eine niedrige Wärmeleitfähigkeit aufweisen, vorzugsweise im Bereich von kleiner als 5 Wk⁻¹m⁻1.

### Bezugszeichenliste

- 10: Handgriff gemäss einem ersten Ausführungsbeispiel
- 11: freier Endbereich
- 12: Befestigungsabschnitt
- 13: Übergangsabschnitt
- 14: Erster Abschnitt des Handgriffbereichs
- 15: Griffabschnitt
- 16: Obere/untere Mantelkante
- 17: Verschlussbereich
- 18: Loch
- 19: Öffnung
- 20: Handgriff gemäss einem zweiten Ausführungsbeispiel
- 21: Eckkante
- 23: verbleibender Metallbereich
- 26: Seitliche Mantelfläche
- 27: Übergangsbereich
- 30: Handgriff gemäss einem dritten Ausführungsbeispiel
- 31: Endstück
- 32: Bohrung
- 33: durchgehende Bohrung
- 36: umlaufender Rand
- 37: Verschlussdeckel
- 38: Bohrung
- 40: Handgriff gemäss einem vierten Ausführungsbeispiel
- 43: verbleibender Metallbereich
- 60: Keramikstück
- 70: Keramikstück
- 71: Mantelfläche
- 74: Bohrung
- 75: Schraube
- 80: Keramikstück
- 81: Eckbereich
- 82: Nut
- 83: überstehender Ansatz
- 85: Haltebügel
- 86: Seitenarmbereich
- 87: Längsbügelarm
- 90: Keramikstück
- 91: Mantelfläche
- 92: innere Konturfläche
- 93: Kante
- 94: Durchbohrung
- 95: Arretierungsstift
- 100: Handgriff gemäss einem fünften Ausführungsbeispiel
- 102: Einschuböffnung
- 103: Innenwandung
- 110: Keramikstück
- 111: Mantelfläche
- 112: Mantelkanten
- 113: Keramikkörper
- 114: Anschlagsoberfläche
- 115: hintere Seite
- 116: Aufnahmeöffnungen
- 120: Federstück
- 121: Grundkörper
- 122: Federlappen
- 123: Federschenkel

## Patentansprüche

1. Kochgefäss mit einem Handgriff (20, 40, 100), insbesondere für einen Topf oder eine Pfanne mit einem Handgriff, dessen Griffbereich (15) aus Metall besteht, wobei der Handgriff über mindestens einen ersten im wesentlichen metallischen Befestigungsabschnitt (12) für die Befestigung an dem Kochgefäss, einen Übergangsabschnitt (13) und einen im wesentlichen metallischen Griffabschnitt (14, 15) verfügt, wobei der Übergangsabschnitt (13) im Querschnitt einen gegenüber den benachbarten Abschnitten (12 und 14, 15) verminderten Metallquerschnitt aufweist, wobei der Übergangsabschnitt (13) aus einem einstückig mit den benachbarten Abschnitten (12 und 14, 15) verbundenen Metallabschnitt (23) und einer Wärmesperre (60, 80, 90, 110) besteht, wobei die Wärmesperre (60, 80, 90, 110) formschlüssig oder kraftschlüssig mit den benachbarten angrenzenden Metallabschnitten (12, 23, 14) verbunden ist,
**dadurch gekennzeichnet, dass** ein Federstück (85, 120) vorgesehen ist, um die Wärmesperre (60, 80, 90, 110) gegen den Handgriff (20, 100) zu verspannen.

2. Kochgefäss nach Anspruch 1, **dadurch gekennzeichnet, dass** die Wärmesperre (80) eine längs verlaufende Nut (82) aufweist und dass das Federstück ein Bügel (85) ist, um in den Abschnitten (12, 14) eingesetzt zu werden und die Wärmesperre (80) gegen den Handgriff (20) zu verspannen.

3. Kochgefäss nach Anspruch 1 oder 2, **dadurch gekennzeichnet, dass** die Wärmesperre (60, 80, 90, 110) über Ansätze (83) verfügt, die unter den Rand des Übergangsabschnittes (13) ragen.

4. Kochgefäss nach Anspruch 1, **dadurch gekennzeichnet, dass** die Wärmesperre (110) über Anschlagoberflächen (114) verfügt, die unter den Rand des Übergangsabschnittes (13) ragen, und dass das Federstück (120) ausgestaltet ist, um in den Übergangsabschnitt (13) eingesetzt zu werden und die Wärmesperre (120) gegen den Übergangsabschnitt (13) des Handgriffs (100) zu verspannen.

5. Kochgefäss nach einem der Ansprüche 1 bis 4, **dadurch gekennzeichnet, dass** die Mantelfläche (71, 91) der Wärmesperre (60, 80, 90, 110) bündig oder nahezu bündig mit den angrenzenden Metallabschnitten (12, 23, 14) abschliesst.

6. Kochgefäss nach einem der Ansprüche 1 bis 5, **dadurch gekennzeichnet, dass** der Befestigungsabschnitt (12) eine Länge von 5 bis 25 Millimeter, insbesondere von 10 bis 15 Millimeter, aufweist.

7. Kochgefäss nach einem der Ansprüche 1 bis 6, **dadurch gekennzeichnet, dass** der Übergangsabschnitt (13) eine Länge von 10 bis 30 Millimeter, insbesondere vorzugsweise zwischen 15 und 25 Millimeter, aufweist.

8. Kochgefäss nach einem der Ansprüche 1 bis 7, **dadurch gekennzeichnet, dass** die Wärmesperre (60, 80, 90, 110) aus einem Material besteht, welches Temperaturen von grösser 250° Celsius widersteht und eine Wärmeleitfähigkeit von kleiner 5 Wk⁻¹m⁻¹ aufweist.

9. Kochgefäss nach einem der Ansprüche 1 bis 8, **dadurch gekennzeichnet, dass** die Wärmesperren (60, 80, 90, 110) aus einem Keramikmaterial, vorteilhafterweise ausgewählt aus der gruppe umfassend Zirkonoxid, Magnesiumaluminiumsilikat und Glaskeramik, oder aus Kunststoff besteht.

10. Kochgefäss nach einem der Ansprüche 1 bis 9, **dadurch gekennzeichnet, dass** die Wärmesperre (60, 80, 90, 110) eine Mantelfläche aufweist, die entweder symmetrisch gegenüber einer dem Boden des Kochgefässes parallelen Ebene oder symmetrisch gegenüber einer senkrecht dazu angeordneten, die longitudinale Achse des Handgriffs (10, 20, 30, 40) umfassenden Ebene angeordnet ist, und dass die Wärmesperre (60, 80, 90, 110) dabei einen Winkel zwischen 120 und 270 Grad, vorzugsweise um 180 Grad abdeckt.

## Claims

1. A cooking vessel with a handle (20, 40, 100), in particular for a pot or a pan with a handle, the grip region (15) of said handle being made of metal, the handle having at least a first substantially metallic fastening portion (12) for fastening to the cooking vessel, a transition portion (13) and a substantially metallic grip portion (14, 15), the transition portion (13) having in cross section a metal cross section which is reduced compared to the adjacent portions (12 and 14, 15), wherein the transition portion (13) consists of a metal portion (23), which is integrally connected to the adjacent portions (12 and 14, 15), and a thermal barrier (60, 80, 90, 110), wherein the thermal barrier (60, 80, 90, 110) is connected to the adjacent adjoining metal portions (12, 23, 14) in an interlocking or force-transmitting manner, **characterized in that** a spring means (85, 120) is provided to brace the thermal barrier (60, 80, 90, 110) against the handle (20, 100).

2. The cooking vessel as claimed in claim 1, **characterized in that** the thermal barrier (80) has a longitudinally extending groove (82) and **in that** the spring means is a clip (85) to be inserted in the portions (12, 14) and to brace the thermal barrier (80) against the handle (20).

3. The cooking vessel as claimed in one of claims 1 or 2, **characterized in that** the thermal barrier (60, 80, 90, 110) has projections (83) which protrude below the edge of the transition portion (13).

4. The cooking vessel as claimed in claim 1, **characterized in that** the thermal barrier (110) has stop surfaces (114) which protrude below the edge of the transition portion (13), and **in that** the spring means (120) is adapted to be inserted in the transition portion (13) and to brace the thermal barrier (120) against the transition portion (13) of the handle (100).

5. The cooking vessel as claimed in one of claims 1 to 4, **characterized in that** the jacket surface (71, 91) of the thermal barrier (60, 80, 90, 110) is flush or almost flush with the adjoining metal portions (12, 23, 14).

6. The cooking vessel as claimed in one of claims 1 to 5, **characterized in that** the fastening portion (12) has a length of from 5 to 25 millimeters, in particular from 10 to 15 millimeters.

7. The cooking vessel as claimed in one of claims 1 to 6, **characterized in that** the transition portion (13) has a length of from 10 to 30 millimeters, in particular preferably between 15 and 25 millimeters.

8. The cooking vessel as claimed in one of claims 1 to 7, **characterized in that** the thermal barrier (60, 80, 90, 110) is made of a material which withstands temperatures of greater than 250 °C and has thermal conductivity of less than 5 Wk⁻¹m⁻¹.

9. The cooking vessel as claimed in one of claims 1 to 8, **characterized in that** the thermal barrier (60, 80, 90, 110) is made of a ceramic material, advantageously selected from the group comprising zirconium oxide, magnesium aluminum silicate and glass ceramic, or is made of plastics material.

10. The cooking vessel as claimed in one of claims 1 to 9, **characterized in that** the thermal barrier (60, 80, 90, 110) has a jacket surface which is arranged symmetrically relative to a plane which is parallel to the base of the cooking vessel or symmetrically relative to a plane which is arranged perpendicularly thereto and comprises the longitudinal axis of the handle (10, 20, 30, 40), and **in that** the thermal barrier (60, 80, 90, 110) cover in this case an angle of between 120 and 270 degrees, preferably about 180 degrees.

## Revendications

1. Un récipient de cuisson muni d'un manche (20, 40, 100), en particulier une casserole ou un poêle muni d'un manche, la section de poignée (15) dudit manche étant en métal, le manche ayant au moins une première section de fixation (12) essentiellement métallique pour fixation au récipient de cuisson, une section de transition (13) et une section de poignée (14, 15) essentiellement métallique, la section de transition (13) ayant en coupe transversale une section transversale métallique s'effilant par comparaison aux sections adjacentes (12 et 14, 15), où la section de transition (13) est constituée d'une section métallique (23), qui est intégralement rattachée aux sections adjacentes (12 et 14, 15), et d'une barrière thermique (60, 80, 90, 110), où la barrière thermique (60, 80, 90, 110) est rattachée aux sections métalliques attenantes adjacentes (12, 23, 14) par verrouillage ou transmission de force, **caractérise en ce que** un élément de ressort (85, 120) est prévu pour coincer la barrière thermique (60, 80, 90, 110) contre la manche (20, 100).

2. Le récipient de cuisson tel revendiqué dans la revendication 1, **caractérisé en ce que** la barrière thermique (80) a une rainure se prolongeant longitudinalement (82) et **en ce que** l'élément de ressort est une agrafe (85) fournie pour être insérée dans les sections (12, 14) et pour coincer la barrière thermique (80) contre le manche (20).

3. Le récipient de cuisson tel revendiqué dans l'une des revendications 1 ou 2, **caractérisé en ce que** la barrière thermique (60, 80, 90, 110) a des projections (83) qui avancent en dessous du bord de la section de transition (13).

4. Le récipient de cuisson tel revendiqué dans la revendication 1, **caractérisé en ce que** la barrière thermique (110) comprend des surfaces d'arrêt (114) qui avancent en dessous du bord de la section de transition (13), et **en ce que** l'élément de ressort (120) est adapté pour être introduit dans la section de transition (13) et pour coincer la barrière thermique (120) contre la section de transition (13) de la manche (100).

5. Le récipient de cuisson tel revendiqué dans l'une des revendications 1 à 4, **caractérisé en ce que** la surface de gaine (71, 91) de la barrière thermique (60, 80, 90, 110) affleure ou presque affleure les sections métalliques attenantes (12, 23, 14).

6. Le récipient de cuisson tel revendiqué dans l'une des revendications 1 à 5, **caractérisé en ce que** la section de fixation (12) a une longueur de 5 à 25 millimètres, en particulier de 10 à 15 millimètres.

7. Le récipient de cuisson tel revendiqué dans l'une des revendications 1 à 6, **caractérisé en ce que** la section de transition (13) a une longueur de 10 à 30 millimètres, en particulier préférablement de 15 à 25 millimètres.

8. Le récipient de cuisson tel revendiqué dans l'une des revendications 1 à 7, **caractérisé en ce que** la barrière thermique (60, 80, 90, 110) est faite d'un matériau qui supporte des températures supérieures à 250 °C et qui a une conductivité thermique inférieure à 5 WK⁻¹m⁻¹.

9. Le récipient de cuisson tel revendiqué dans l'une des revendications 1 à 8, **caractérisé en ce que** la barrière thermique (60, 80, 90, 110) est faite d'un matériau céramique, avantageusement sélectionné du groupe comprenant l'oxyde de zirconium, le silicate de magnésium et d'aluminium et la vitrocéramique, ou est faite en matériau plastique.

10. Le récipient de cuisson tel revendiqué dans l'une des revendications 1 à 9, **caractérisé par le fait que** la barrière thermique (60, 80, 90, 110) a une surface de gaine qui est symétriquement arrangée par rapport à un plan parallèle à la base du récipient de cuisson ou symétriquement par rapport à un plan arrangé perpendiculairement et qui comprend l'axe longitudinal du manche (10, 20, 30, 40), et en ce que la barrière thermique (60, 80, 90, 110) couvre dans ce cas un angle compris entre 120 et 270 degrés, de préférence environ 180 degrés.
